# EUROPÄISCHE PATENTSCHRIFT

(11) **EP 4 070 635 B1**
(45) Veröffentlichungstag und Bekanntmachung des Hinweises auf die Patenterteilung: **25.02.2026**
(21) Anmeldenummer: 22166550.8
(22) Anmeldetag: 04.04.2022
(51) Int. Cl.: A01B 49/06, A01C 7/20, A01C 21/00, A01B 63/24

(54) **VERFAHREN ZUM SÄEN MITTELS EINER SÄMASCHINE**
SOWING METHOD USING A SOWING MACHINE
PROCÉDÉ DE SEMIS AU MOYEN D'UN SEMOIR

(30) Priorität: 08.04.2021 AT 502542021
(43) Veröffentlichungstag der Anmeldung: 12.10.2022
(73) Patentinhaber: Pöttinger Landtechnik GmbH, 4710 Grieskirchen (AT)
(72) Erfinder: KIRCHMAYR, Alois, 4710 Grieskirchen (AT); STADLBAUER, Franz, 4710 Grieskirchen (AT); PÖLZL, Andreas, 4710 Grieskirchen (AT); SCHAUER, Dominik, 4710 Grieskirchen (AT); SCHULTE, Thorsten, 4710 Grieskirchen (AT); EDELBAUER, Roland, 4710 Grieskirchen (AT)
(74) Vertreter: Burger, Hannes

(56) Entgegenhaltungen:
- EP-A1- 2 870 848
- EP-A2- 0 928 553
- EP-A2- 1 364 573
- EP-B1- 3 262 911
- WO-A1-2011/115477
- DE-A1- 3 505 547
- DE-U1- 202019 100 926
- GB-A- 2 133 556
- US-A1- 2016 157 413

## Beschreibung

Die Erfindung betrifft ein Verfahren zum Säen mittels einer Sämaschine, sowie die Sämaschine selbst.

Die EP3262911B1 offenbart ein Verfahren zum Säen, umfassend: (a) Durchführen einer Mehrzahl von Sä-Durchläufen über einem Feld unter Verwendung einer Kultivierungs-Einzelkorn-Sämaschine, die einen mobilen Rahmen aufweist; (b) Kultivieren des Bodens während jedes Sä-Durchlaufs unter Verwendung einer Gruppe von Kultivierungsmitteln, die an dem Rahmen angebracht sind und sich in einer abgesenkten Position befinden, wenn der Rahmen den Boden überquert; (c) Öffnen von Furchen in dem kultivierten Boden während jedes Sä-Durchlaufs unter Verwendung einer Gruppe von Öffnungsmitteln, die an dem Rahmen in einer abgesenkten Position hinter den Kultivierungsmitteln angebracht sind; (d) Dosieren von Saatgut aus einer Saatgut-Dosiereinrichtung in einen Luftstrom, der während jedes Sä-Durchlaufs Saatgut an die Öffnungsmittel liefert, (e) Ausgeben des dosierten Saatguts in die Furchen mittels der Öffnungsmittel, wenn der Rahmen den Boden überquert; und (f) wenn sich der mobile Rahmen einem Vorgewende an einem Ende eines Sä-Durchlaufs nähert, aufeinanderfolgendes Anheben der Kultivierungsmittel und der Öffnungsmittel aus dem Boden und in angehobene Positionen, in einer solchen Weise, dass die Kultivierungsmittel zuerst angehoben werden und die Öffnungsmittel nach den Kultivierungsmitteln angehoben werden, wobei der Schritt des Anhebens das Steuern der Position der Kultivierungsmittel und der Öffnungsmittel in einer Weise umfasst, um das Anheben der Kultivierungsmittel aus dem Boden zu bewirken, während die Schritte des Öffnens und des Ausgebens durch die Öffnungsmittel in ihrer abgesenkten Position fortgesetzt werden, bis die Kultivierungsmittel ihre vollständig angehobene Position erreichen, wobei das Anheben der Öffnungsmittel aus ihrer abgesenkten Position erst dann beginnt, nachdem zuerst die Kultivierungsmittel ihre angehobene Position erreicht haben. Anschließend wird das Dosieren von Saatgut in den Luftstrom durch die Saatgut-Dosiereinrichtung beendet, wenn die Kultivierungsmittel beginnen, sich aus ihrer abgesenkten Position in Richtung auf ihre angehobene Position anzuheben. Die Detektion des Erreichens der angehobenen Position der Kultivierungsmittel erfolgt mittels eines Sensors.

Das aus der EP3262911B1 bekannte Verfahren bzw. die Sämaschine weist den Nachteil auf, dass nur ein unzureichendes Säergebnis erreicht werden kann.

Aufgabe der vorliegenden Erfindung war es, die Nachteile des Standes der Technik zu überwinden und ein Verfahren und eine Sämaschine zur Verfügung zu stellen, mittels derer ein verbessertes Säergebnis erreicht werden kann.

Diese Aufgabe wird durch ein Verfahren und eine Vorrichtung gemäß den Ansprüchen gelöst.

Erfindungsgemäß ist ein Verfahren zum Säen von Saatgut mittels einer Sämaschine mit einem Vorwerkzeug und einem Säwerkzeug vorgesehen. Das Verfahren umfasst die Verfahrensschritte:
- Bearbeiten eines Bodens mittels dem Vorwerkzeug;
- Einbringen von Saatgut in den Boden mittels dem Säwerkzeug;
- wenn die Sämaschine eine von einer Bearbeitungsfläche in ein Vorgewende überfährt, aufeinanderfolgendes Anheben des Vorwerkzeuges und des Säwerkzeuges, in einer solchen Weise, dass das Vorwerkzeug zuerst angehoben wird und das Säwerkzeug nach dem Vorwerkzeug angehoben wird,
dadurch gekennzeichnet, dass
beim Überfahren der Vorgewendegrenze von einer Bearbeitungsfläche in ein Vorgewende mittels einer Recheneinheit ein Steuerbefehl zum Anheben des Vorwerkzeuges gegeben wird und dass mittels eines Wegmesssensors die zurückgelegte Wegstrecke der Sämaschine, seit dem Steuerbefehl zum Anheben des Vorwerkzeuges, erfasst wird, wobei mittels der Recheneinheit ein Steuerbefehl zum Anheben des Säwerkzeuges gegeben wird, wenn die definierte Wegstrecke, seit dem Steuerbefehl zum Anheben des Vorwerkzeuges, zurückgelegt wurde.

Das erfindungsgemäße Verfahren weist den Vorteil auf, dass das Vorwerkzeug beziehungsweise das Säwerkzeug unabhängig von der aktuellen Fahrgeschwindigkeit beziehungsweise von der Hydraulikleistung des Zugfahrzeuges exakt bei der Überfahrt der Vorgewendegrenze angehoben werden können. Somit ist die aktuelle Hubstellung des Vorwerkzeuges nicht ausschlaggebend, ob das Säwerkzeug angehoben wird, sondern kann das Säwerkzeug exakt an der Vorgewendegrenze angehoben werden. Dadurch kann die Qualität des Sävorganges enorm verbessert werden. Im Gegensatz dazu ist bei einem Verfahren wie dies aus dem Stand der Technik bekannt ist, die Position bei welcher das Säwerkzeug angehoben wird, von diversen Faktoren, wie etwa des zur Verfügung stehenden Hydraulikstroms, der aktuellen Fahrgeschwindigkeit beziehungsweise der vorgenommen Grundeinstellungen zu den Hubgeschwindigkeiten abhängig.

Ein Säwerkzeug im Sinne dieses Dokumentes kann eine Säschiene umfassen, an welcher einzelne Ablegerinnen oder Ablegerohre zum Einbringen von Saatgut in den Boden angeordnet sein können. Weiters kann vorgesehen sein, dass das Säwerkzeug ein Öffnungsmittel umfasst, welches zum Herstellen einer Furche dient, in welche das Saatgut in den Boden einbringbar ist. Insbesondere kann hierbei vorgesehen sein, dass die Ablegerinnen oder Ablegerohre jeweils exakt hinter den Öffnungsmittel angeordnet sind, sodass das Saatgut direkt in die Furche eingebracht werden kann.

Ein Vorwerkzeug im Sinne dieses Dokumentes kann eine Scheibenegge, Kreiselegge, Federzahnegge, Grubber, Frontboard, Düngerschar oder ein sonstiges Bodenbearbeitungswerkzeug sein.

Eine Sämaschine im Sinne dieses Dokumentes kann eine autonom betreibbare Arbeitsmaschine sein. Alternativ dazu ist es auch denkbar, dass eine Sämaschine im Sinne dieses Dokumentes ein Arbeitsgerät ist, welches von einem Schlepper beziehungsweise einer Zugmaschine gezogen wird.

Weiters kann es auch zweckmäßig sein, wenn mehrere Vorwerkzeuge hintereinander angeordnet sind.

Weiters kann es zweckmäßig sein, wenn der Wegmesssensor als Radarsensor ausgebildet ist, welcher für eine definierte Wegstrecke eine definierte Anzahl an steigenden Flanken eines Binärsignals an die Recheneinheit liefert, wobei in der Recheneinheit über die vorliegende Anzahl an steigenden Flanken, seit dem Steuerbefehl zum Anheben des Vorwerkzeuges, die zurückgelegte Wegstrecke, seit dem Steuerbefehl zum Anheben des Vorwerkzeuges, ermittelt wird. Dies bringt den Vorteil mit sich, dass ein einfach aufgebauter Sensor und somit robuster Sensor als Wegmesssensor verwendet werden kann. Darüber hinaus kann mittels eines Radarsensors die Wegstrecke mit einer ausreichenden Genauigkeit gemessen beziehungsweise abgetastet werden. Dadurch, dass ein Radarsensor einer vordefinierte Anzahl an steigenden Flanken eines Binärsignals für eine vorgegebene Wegstrecke, beispielsweise einen Meter abliefert, kann das Signal des Radarsensors durch Zählen beziehungsweise Erfassen der steigenden Flanken auch einfach in der Recheneinheit ausgewertet werden.

Insbesondere kann vorgesehen sein, dass der Radarsensor zwischen 100 und 150 steigende Flanken eines Binärsignals pro Meter abliefert. Dies bringt eine für die vorliegenden Zwecke ausreichende Genauigkeit der Wegstreckenmessung.

Weiters kann es zweckmäßig sein, wenn die definierte Wegstrecke, nach dem Steuerbefehl zum Anheben des Vorwerkzeuges, bereits werksseitig vorgegeben ist und durch einen Maschinenbediener nicht verstellbar ist. Dies kann die Einfachheit der Sämaschine erhöhen. Die definierte Wegstrecke kann deswegen schon werkseitig festgelegt werden, da diese ausschließlich vom baulichen Abstand zwischen dem Vorwerkzeug und dem Säwerkzeug abhängt und daher während dem Betrieb der Sämaschine nicht verändert werden muss.

In einer alternativen Ausführungsvariante kann vorgesehen sein, dass die definierte Wegstrecke vom Maschinenbediener in einer Voreinstellung beeinflusst werden kann. Somit ist es beispielsweise denkbar, dass das Anheben des Säwerkzeuges je nach Feldbeschaffenheit bzw. je nach auszubringendem Saatgut angepasst wird.

Weiters ist es denkbar, dass gleichzeitig mit dem Anheben des Säwerkzeuges auch die Saatgutzufuhr zum Säwerkzeug gestoppt wird.

Alternativ dazu ist es auch denkbar, dass die Saatgutzufuhr zum Säwerkzeug bereits etwas früher gestoppt wird, als das Säwerkzeug angehoben wird, sodass in den Zuführvorrichtungen befindliches Saatgut noch ohne Verluste ausgebracht werden kann.

Ferner kann vorgesehen sein, dass der Steuerbefehl zum Anheben des Vorwerkzeuges durch einen Eingabebefehl eines Maschinenbedieners in eine Bedienerschnittstelle gestartet wird. Dies bringt den Vorteil mit sich, dass der Maschinenbediener auf Basis seiner Erfahrung die Vorgewendegrenze selbst definieren beziehungsweise festlegen kann.

In einer alternativen Ausführungsvariante kann auch vorgesehen sein, dass der Steuerbefehl zum Anheben des Vorwerkzeuges durch Auswertung eines Erfassungsmittels, beispielweise einer an einem Schlepper oder an der Sämaschine angeordneten Kamera, gestartet wird.

In einer weiteren alternativen Ausführungsvariante kann auch vorgesehen sein, dass der Steuerbefehl zum Anheben des Vorwerkzeuges auf Basis von Positionsdaten, wie etwa durch GPS-Sensoren beziehungsweise Beschleunigungssensoren, gestartet wird.

Darüber hinaus kann vorgesehen sein, dass ein linkes Vorwerkzeug und ein rechtes Vorwerkzeug, sowie ein linkes Säwerkzeug und ein rechtes Säwerkzeug ausgebildet sind, wobei
- ein Hubvorgang für das linke Vorwerkzeug durch einen ersten Eingabebefehl gestartet wird, welcher durch einen Maschinenbediener eingegeben wird und in der Recheneinheit einen Steuerbefehl zum Anheben des linken Vorwerkzeuges auslöst, und wobei mittels des Wegmesssensors die zurückgelegte Wegstrecke der Sämaschine, seit dem Steuerbefehl zum Anheben des linken Vorwerkzeuges, erfasst wird, wobei mittels der Recheneinheit ein Steuerbefehl zum Anheben des linken Säwerkzeuges gegeben wird, wenn eine definierte Wegstrecke, seit dem Steuerbefehl zum Anheben des linken Vorwerkzeuges, zurückgelegt wurde und wobei
- ein Hubvorgang für das rechte Vorwerkzeug durch einen zweiten Eingabebefehl gestartet wird, welcher durch einen Maschinenbediener eingegeben wird und in der Recheneinheit einen Steuerbefehl zum Anheben des rechten Vorwerkzeuges auslöst, und wobei mittels des Wegmesssensors die zurückgelegte Wegstrecke der Sämaschine, seit dem Steuerbefehl zum Anheben des rechten Vorwerkzeuges, erfasst wird, wobei mittels der Recheneinheit ein Steuerbefehl zum Anheben des rechten Säwerkzeuges gegeben wird, wenn eine definierte Wegstrecke, seit dem Steuerbefehl zum Anheben des rechten Vorwerkzeuges, zurückgelegt wurde. Dies ist besonders dann vorteilhaft, wenn die Vorgewendegrenze nicht rechtwinkelig zur aktuellen Fahrbewegung oder Fahrtrichtung der Sämaschine verläuft, sondern wenn diese in einem vom rechten Winkel abweichenden Winkel zur aktuellen Fahrtrichtung angeordnet ist.

In einem weiteren, alternativen Ausführungsbeispiel ist es natürlich auch denkbar, dass der Hubvorgang für das linke Vorwerkzeug für das rechte Vorwerkzeug analog zur beschriebenen Ausführung entsprechend gegengleich gestartet wird.

Vorteilhaft ist auch eine Ausprägung gemäß welcher vorgesehen sein kann, dass bei einem Überfahren der Vorgewendegrenze vom Vorgewende in die Bearbeitungsfläche mittels der Recheneinheit ein Steuerbefehl zum Absenken des Vorwerkzeuges gegeben wird und dass mittels des Wegmesssensors die zurückgelegte Wegstrecke der Sämaschine, seit dem Steuerbefehl zum Absenken des Vorwerkzeuges, erfasst wird, wobei mittels der Recheneinheit ein Steuerbefehl zum Absenken des Säwerkzeuges gegeben wird, wenn eine definierte Wegstrecke, seit dem Steuerbefehl zum Absenken des Vorwerkzeuges, zurückgelegt wurde. Dies bringt den Vorteil mit sich, dass auch bei einem Einfahren vom Vorgewende in die Bearbeitungsfläche die Bearbeitung exakt an der Vorgewendegrenze gestartet werden kann.

Gemäß einer Weiterbildung ist es möglich, dass das Vorwerkzeug in eine vordefinierte Eintauchposition abgesenkt wird, wobei die aktuell vorliegende Eintauchposition mittels einer Tiefenmesssensorik erfasst und an die Recheneinheit übermittelt wird und/oder dass das Säwerkzeug in eine vordefinierte Eintauchtiefe abgesenkt wird, wobei die aktuell vorliegende Eintauchposition mittels einer Tiefenmesssensorik erfasst und an die Recheneinheit übermittelt wird. Dies bringt den Vorteil mit sich, dass durch das Einbringen des Saatgutes in der richtigen Tiefe der Wachstumsprozess verbessert werden kann und somit der Ertrag am Feld gesteigert werden kann. Im Gegensatz dazu wird bei aus dem Stand der Technik bekannten Sämaschinen die Eintauchposition nicht über eine Tiefenmesssensorik vorgegeben, sondern ist eine gewichtsabhängigen Eintauchsteuerung vorgesehen, bei welcher sich die Eintauchposition aufgrund der Bodenhärte ergibt.

Ein möglicher Verfahrensablauf zum Ausbringen von Saatgut wird nachstehend in seiner Gesamtheit beschrieben. Um das Feld zu bearbeiten, wird mittels einer Sämaschine vom Vorgewende in die Bearbeitungsfläche eingefahren. Wenn die Vorgewendegrenze überfahren wird, kann der Maschinenbediener mittels eines Eingabebefehls in die Bedienerschnittstelle einen Steuerbefehl zum Absenken des Vorwerkzeuges geben. Hierbei kann das elektrische Ventil, mittels welchem der Vorwerkzeughydraulikzylinder gekoppelt ist, derart geschalten werden, dass das Vorwerkzeug abgesenkt wird. Weiters kann mittels eines Wegmesssensors eine zurückgelegte Wegstrecke der Sämaschine, seit dem Steuerbefehl zum Absenken des Vorwerkzeuges, erfasst werden. Mittels der Recheneinheit kann ein Steuerbefehl zum Absenken des Säwerkzeuges gegeben werden, wenn die definierte Wegstrecke, seit dem Steuerbefehl zum Absenken des Vorwerkzeuges, zurückgelegt wurde. Hierbei kann das elektrische Ventil, mittels welchem der Säwerkzeughydraulikzylinder gekoppelt ist, derart geschalten werden, dass das Säwerkzeug abgesenkt wird. Gleichzeitig bzw. optional auch etwas früher oder später kann mittels einer Saatgut-Dosiervorrichtung eine Saatgutzufuhr zum Säwerkzeug gestartet werden. Anschließend kann das Saatgut in die Bearbeitungsfläche ausgebracht werden.

Am Ende der Bearbeitungsfläche wird von der Bearbeitungsfläche in das Vorgewende eingefahren. Wenn die Vorgewendegrenze überfahren wird, kann der Maschinenbediener mittels eines Eingabebefehls in die Bedienerschnittstelle einen Steuerbefehl zum Anheben des Vorwerkzeuges geben. Hierbei kann das elektrische Ventil, mittels welchem der Vorwerkzeughydraulikzylinder gekoppelt ist, derart geschalten werden, dass das Vorwerkzeug angehoben wird. Weiters kann mittels eines Wegmesssensors eine zurückgelegte Wegstrecke der Sämaschine, seit dem Steuerbefehl zum Anheben des Vorwerkzeuges, erfasst werden. Mittels der Recheneinheit kann ein Steuerbefehl zum Anheben des Säwerkzeuges gegeben werden, wenn die definierte Wegstrecke, seit dem Steuerbefehl zum Anheben des Vorwerkzeuges, zurückgelegt wurde. Hierbei kann das elektrische Ventil, mittels welchem der Säwerkzeughydraulikzylinder gekoppelt ist, derart geschalten werden, dass das Säwerkzeug angehoben wird. Gleichzeitig bzw. optional auch etwas früher oder später kann mittels der Saatgut-Dosiervorrichtung eine Saatgutzufuhr zum Säwerkzeug gestoppt werden. Anschließend kann das Saatgut in die Bearbeitungsfläche ausgebracht werden.

In einer weiteren Ausführungsvariante ist es auch denkbar, dass der Steuerbefehl zum Anheben des Vorwerkzeuges bzw. der Steuerbefehl zum Absenken des Vorwerkzeuges nicht zeitgleich mit dem Eingabebefehl des Maschinenbedieners in die Bedienerschnittstelle erfolgt, sondern dass der Steuerbefehl verzögert zum Eingabebefehl des Maschinenbedieners erfolgt. Somit ist es möglich, dass der Maschinenbediener den Eingabebefehl bereits gibt, wenn beispielsweise das Vorderrad des Zugfahrzeuges die Vorgewendegrenze überfährt. Der Steuerbefehl zum Anheben des Vorwerkzeuges bzw. der Steuerbefehl zum Absenken des Vorwerkzeuges kann durch die Recheneinheit gegeben werden, wenn eine definierte Wegstrecke, seit dem Eingabebefehl, zurückgelegt wurde. Dies bringt den Vorteil mit sich, dass markante Punkte am Zugfahrzeug, wie etwa das Vorderrad gut einsehbar sind und somit eine exakte Befehlseingabe durch den Maschinenbediener möglich ist.

Erfindungsgemäß ist eine Sämaschine mit einem Vorwerkzeug und einem Säwerkzeug ausgebildet, wobei das Vorwerkzeug zum Bearbeiten eines Bodens ausgebildet ist und wobei das Säwerkzeug zum Einbringen von Saatgut in den Boden ausgebildet ist und wobei das Vorwerkzeug mit einer Vorwerkzeughubvorrichtung gekoppelt ist und wobei das Säwerkzeug mit einer Säwerkzeughubvorrichtung gekoppelt ist, wobei das Vorwerkzeug und das Säwerkzeug unabhängig voneinander anhebbar sind. Weiters ist eine Recheneinheit ausgebildet, welche derart konfiguriert ist, dass ein Steuerbefehl zum Anheben des Vorwerkzeuges und ein weiterer Steuerbefehl zum Anheben des Säwerkzeuges gebbar ist wobei ein Wegmesssensor ausgebildet ist, mittels welchem die zurückgelegte Wegstrecke der Sämaschine erfassbar ist, wobei der Wegmesssensor mit der Recheneinheit gekoppelt ist, wobei die Recheneinheit zum Ausführen der Steuerbefehle des Verfahrens nach einer der obigen Ausführungen ausgebildet ist.

Die erfindungsgemäße Sämaschine bringt den Vorteil mit sich, dass das Vorwerkzeug beziehungsweise das Säwerkzeug unabhängig von der aktuellen Fahrgeschwindigkeit beziehungsweise von der Hydraulikleistung des Zugfahrzeuges exakt bei der Überfahrt der Vorgewendegrenze angehoben bzw. abgesenkt werden können. Somit ist die aktuelle Hubstellung des Vorwerkzeuges nicht ausschlaggebend, ob das Säwerkzeug angehoben bzw. abgesenkt wird, sondern kann das Säwerkzeug exakt an der Vorgewendegrenze angehoben bzw. abgesenkt werden. Dadurch kann die Qualität des Sävorganges enorm verbessert werden.

Darüber hinaus kann vorgesehen sein, dass ein elektrischer Hydrauliksteuerventilblock ausgebildet ist, welcher mit einem Vorwerkzeughydraulikzylinder der Vorwerkzeughubvorrichtung und mit einem Säwerkzeughydraulikzylinder der Säwerkzeughubvorrichtung gekoppelt ist, wobei mittels des elektrischen Hydrauliksteuerventilblockes selektiv ein Hydraulikflüssigkeitsstrom in den Vorwerkzeughydraulikzylinder und/oder in den Säwerkzeughydraulikzylinder leitbar ist. Dies bringt den Vorteil mit sich, dass mittels des elektrischen Hydrauliksteuerventilblockes der Säwerkzeughydraulikzylinder und der Vorwerkzeughydraulikzylinder einzeln und unabhängig voneinander betätigt werden können. Somit kann ausschließlich nach Steuervorgabe der Säwerkzeughydraulikzylinder beziehungsweise der Vorwerkzeughydraulikzylinder eingefahren beziehungsweise ausgefahren werden. Dies kann zu beliebigen Zeitpunkten beziehungsweise auch parallel gestartet werden.

Weiters kann vorgesehen sein, dass die Vorwerkzeughubvorrichtung mit einer Tiefenmesssensorik gekoppelt ist, mittels welcher eine Anhebeposition der Vorwerkzeughubvorrichtung erfassbar ist und/oder dass die Säwerkzeughubvorrichtung mit einer Tiefenmesssensorik gekoppelt ist, mittels welcher eine Anhebeposition der Säwerkzeughubvorrichtung erfassbar ist. Dies bringt den Vorteil mit sich, dass durch das Einbringen des Saatgutes in der richtigen Tiefe der Wachstumsprozess verbessert werden kann und somit der Ertrag am Feld gesteigert werden kann. Im Gegensatz dazu wird bei aus dem Stand der Technik bekannten Sämaschinen die Eintauchposition nicht über eine Tiefenmesssensorik vorgegeben, sondern ist eine gewichtsabhängigen Eintauchsteuerung vorgesehen, bei welcher sich die Eintauchposition aufgrund der Bodenhärte ergibt.

Gemäß einer besonderen Ausprägung ist es möglich, dass die Tiefenmesssensorik der Vorwerkzeughubvorrichtung in Form eines Wegmesssensors ausgebildet ist, welcher mit dem Vorwerkzeughydraulikzylinder gekoppelt ist und/oder dass die Tiefenmesssensorik der Säwerkzeughubvorrichtung in Form eines Wegmesssensors ausgebildet ist, welcher mit dem Säwerkzeughydraulikzylinder gekoppelt ist. Dies bringt den Vorteil mit sich, dass ein derartiger Wegmesssensor einfach und robust ausgestattet sein kann, wodurch die Fehleranfälligkeit der Sämaschine vermindert werden kann.

Entsprechend einer vorteilhaften Weiterbildung kann vorgesehen sein, dass der elektrische Hydrauliksteuerventilblock mit einem Hydraulikflüssigkeitszwischenspeicher gekoppelt ist. Dies bringt den Vorteil mit sich, dass im Hydraulikflüssigkeitszwischenspeicher der von einem Zugfahrzeug zur Verfügung stehende Hydraulikflüssigkeitsvolumenstrom zwischengespeichert werden kann und dadurch die Anhebegeschwindigkeiten für die einzelnen Vorwerkzeuge beziehungsweise Säwerkzeuge gesteigert werden können.

Weiters ist es auch denkbar, dass die Sämaschine einzelne unterschiedliche Vorwerkzeuge umfasst, welche in Fahrtrichtung gesehen hintereinander beziehungsweise nebeneinander an der Sämaschine angeordnet sein können.

Insbesondere kann vorgesehen sein, dass die einzelnen Hydraulikventile des Hydrauliksteuerventilblockes in Form von Magnetventilen ausgebildet sind.

Insbesondere kann es vorteilhaft sein, wenn der Hydraulikflüssigkeitszwischenspeicher einen Hydraulikzylinder umfasst, welcher mit einem Anbauteil der Sämaschine, insbesondere mit einem Vorratsbehälter der Sämaschine gekoppelt ist, wobei die Gewichtskraft des Anbauteiles zum Bereitstellen des Hydraulikdruckes im Hydraulikzylinder dient. Dies bringt den Vorteil mit sich, dass die Gewichtskraft des Anbauteils zur Speicherung der notwendigen Energie in Form von potentieller Energie genutzt werden kann.

Ferner kann vorgesehen sein, dass die Vorwerkzeughubvorrichtung mit einer Entlastungsfeder gekoppelt ist
und/oder
dass die Säwerkzeughubvorrichtung mit einer Entlastungsfeder gekoppelt ist. Dies bringt den Vorteil mit sich, dass die einzelnen Hydraulikzylinder kleiner dimensioniert werden können und somit bei gleichem Hub ein nur geringerer Volumenstrom an Hydraulikflüssigkeit benötigt wird, wodurch ein nur geringerer Volumenstrom an Hydraulikflüssigkeit zum Betrieb der Sämaschine bereitgestellt werden muss.

Darüber hinaus kann vorgesehen sein, dass die Entlastungsfeder der Vorwerkzeughubvorrichtung derart dimensioniert und angeordnet ist, dass das Vorwerkzeug in einer bei einem drucklosen Vorwerkzeughydraulikzylinder in einer Gleichgewichtsposition zwischen einer vollständig angehobenen Position und einer vollständig abgesenkten Position verweilt, wobei der Vorwerkzeughydraulikzylinder ein doppeltwirkender Hydraulikzylinder ist
und/oder
dass die Entlastungsfeder der Säwerkzeughubvorrichtung derart dimensioniert und angeordnet ist, dass das Säwerkzeug in einer bei einem drucklosen Säwerkzeughydraulikzylinder in einer Gleichgewichtsposition zwischen einer vollständig angehobenen Position und einer vollständig abgesenkten Position verweilt, wobei der Säwerkzeughydraulikzylinder ein doppeltwirkender Hydraulikzylinder ist. Dies bringt eine weitere Entlastung und somit eine Verminderung des benötigten Volumenstroms der Hydraulikflüssigkeit mit sich.

Lageangaben, wie etwa links, rechts beziehungsweise oben, unten beziehen sich auf die Sämaschine in ihrem Bearbeitungszustand, wobei die Lageangabe links in Fahrtrichtung gesehen links bedeutet und die Lageangabe rechts in Fahrtrichtung gesehen rechts bedeutet.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht eines ersten Ausführungsbeispiels einer Sämaschine;
- Fig. 2: eine Draufsicht eines ersten Ausführungsbeispiels einer Sämaschine;
- Fig. 3: eine stark vereinfachte schematische Darstellung eines Ausführungsbeispiels einer hydraulischen Schaltung für eine Sämaschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

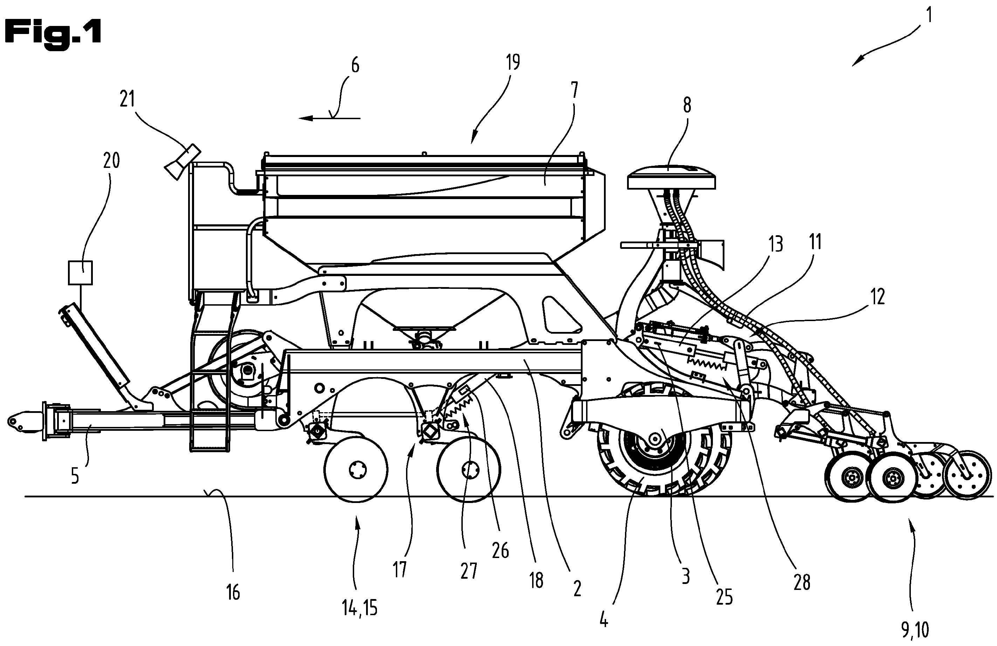

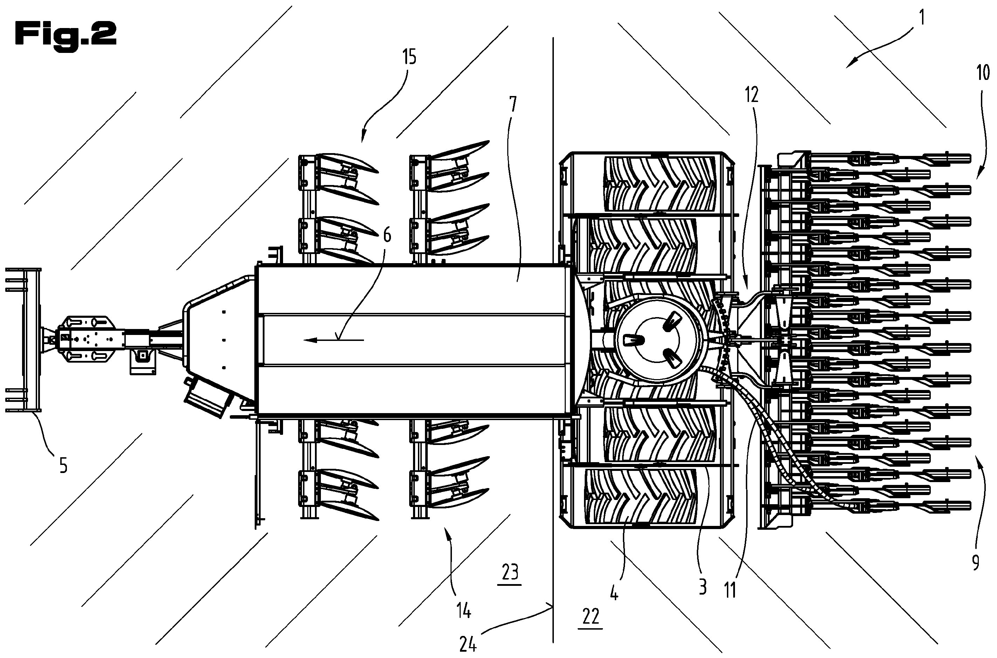

Fig. 1 zeigt eine Seitenansicht eines ersten Ausführungsbeispiels einer Sämaschine 1. Fig. 2 zeigt eine Draufsicht auf das erste Ausführungsbeispiel der Sämaschine 1. Die Sämaschine 1 wird in weiterer Folge anhand einer Zusammenschau der Fig. 1 und 2 beschrieben.

Wie aus Fig. 1 ersichtlich, kann vorgesehen sein, dass die Sämaschine 1 einen Hauptrahmen 2 aufweist, welcher zur Aufnahme der einzelnen Anbauteile dient. Der Hauptrahmen 2 kann mit einem Fahrwerk 3 gekoppelt sein, an welchem mehrere Räder 4 angeordnet sein können.

Weiters kann vorgesehen sein, dass der Hauptrahmen 2 mit einer Deichsel 5 gekoppelt ist, welche zum Verbinden der Sämaschine 1 mit einem nicht dargestellten Zugfahrzeug dient. Im Betrieb wird die Sämaschine 1 vom Zugfahrzeug gezogen, wobei sich die Deichsel 5 in Fahrtrichtung 6 gesehen vorne befindet.

Wie aus Fig. 1 weiters ersichtlich, kann vorgesehen sein, dass die Sämaschine 1 einen Vorratsbehälter 7 aufweist, welcher zur Aufnahme von Saatgut dient. Mit dem Vorratsbehälter 7 kann eine Saatgut-Dosiervorrichtung 8 gekoppelt sein, welche zur kontrollierten Abgabe von Saatgut an ein Säwerkzeug 9, 10 dienen kann. Insbesondere kann vorgesehen sein, dass die Saatgut-Dosiervorrichtung 8 mittels einer Verschlauchung 11 zum Transport von Saatgut mit dem Säwerkzeug 9, 10 verbunden ist. Der Übersichtlichkeit halber, sind in den Fig. 1 und 2 nur einzelne Schläuche der Verschlauchung 11 dargestellt, wobei dem Fachmann jedoch klar ist, dass die Verschlauchungen über die komplette Breite der Sämaschine aufgeteilt sein können.

Der Vorratsbehälter 7 kann im Allgemeinen auch als Anbauteil 19 der Sämaschine 1 bezeichnet werden. Die Sämaschine 1 kann natürlich außer dem Vorratsbehälter 7 auch noch weitere Anbauteile 19 aufweisen.

Wie aus den Fig. 1 und 2 weiters ersichtlich, kann vorgesehen sein, dass das Säwerkzeug 9, 10 mit einer Säwerkzeughubvorrichtung 12 gekoppelt ist, mittels welcher das Säwerkzeug 9, 10 anhebbar ist. Insbesondere kann vorgesehen sein, dass die Säwerkzeughubvorrichtung 12 einen Säwerkzeughydraulikzylinder 13 umfasst, welcher zum Anheben des Säwerkzeuges 9, 10 dient.

Wie aus den Fig. 1 und 2 weiters ersichtlich, kann vorgesehen sein, dass die Sämaschine 1 ein Vorwerkzeug 14, 15 umfasst, welches zum Vorbearbeiten des Bodens 16 dient. Wie aus den Fig. 1 und weiters ersichtlich, kann vorgesehen sein, dass eine Vorwerkzeughubvorrichtung 17 ausgebildet ist, welche zum Anheben des Vorwerkzeuges 14, 15 dient.

Wie aus Fig. 1 weiters ersichtlich, kann vorgesehen sein, dass das Vorwerkzeug 14, 15 ein vorderes und ein hinteres Vorwerkzeug umfasst, wobei die Vorwerkzeughubvorrichtung 17 beispielsweise ein Gestänge umfassen kann, mittels welchem das vordere Vorwerkzeug und das hintere Vorwerkzeug gemeinsam angehoben werden können. Weiters kann vorgesehen sein, dass die Vorwerkzeughubvorrichtung 17 einen Vorwerkzeughydraulikzylinder 18 umfasst, welcher als Aktor für die Hubbewegung dienen kann.

Bei Sämaschinen 1 mit einer großen Arbeitsbreite kann vorgesehen sein, dass ein linkes Säwerkzeug 9 und ein linkes Vorwerkzeug 14 bzw. ein rechtes Säwerkzeug 10 und ein rechtes Vorwerkzeug 15 ausgebildet sind, welche einzeln und unabhängig voneinander angehoben bzw. abgesenkt werden können. Weiters ist es natürlich auch denkbar, dass über die Breite der Sämaschine verteilt weitere zusätzliche Vorwerkzeuge bzw. Säwerkzeuge ausgebildet sind. Insbesondere ist es auch denkbar, dass das linke Säwerkzeug 9 eine eigene Säwerkzeughubvorrichtung 12 aufweist und dass das rechte Säwerkzeug 10 eine eigene Säwerkzeughubvorrichtung 12 aufweist. Analog dazu kann vorgesehen sein, dass das linke Vorwerkzeug 14 eine eigene Vorwerkzeughubvorrichtung 17 aufweist und dass das rechte Vorwerkzeug 15 eine eigene Vorwerkzeughubvorrichtung 17 aufweist.

Weiters kann vorgesehen sein, dass eine Recheneinheit 20 ausgebildet ist, welche zum Auswerten von Daten der Sensoren der Sämaschine 1 bzw. zum Steuern der Sämaschine 1 dient. Insbesondere ist es denkbar, dass die Recheneinheit 20 mit einer genormten Kommunikationsschnittstelle, beispielsweise mit einem ISOBUS mit dem Zugfahrzeug gekoppelt ist. Die Eingabeelemente zum Eingeben von Steuerbefehlen in die Recheneinheit 20 können hierbei am Zugfahrzeug angeordnet sein. Alternativ dazu ist es auch denkbar, dass die Recheneinheit 20 im Zugfahrzeug angeordnet ist und dass die Sensoren der Sämaschine 1 mit der Recheneinheit 20 gekoppelt sind. Die Recheneinheit 20 kann hierbei fest am Zugfahrzeug installiert sein.

Weiters ist es denkbar, dass ein Wegmesssensor 21 ausgebildet ist, welcher zur Messung der zurückgelegten Wegstrecke der Sämaschine 1 dient. Der Wegmesssensor 21 kann beispielsweise in Form eines Radarsensors ausgebildet sein, welcher an der Sämaschine 1 angeordnet sein kann.

Weiters ist es auch denkbar, dass der Wegmesssensor 21 am Zugfahrzeug angeordnet ist.

Darüber hinaus ist es auch denkbar, dass ein interner Wegmesssensors des Zugfahrzeuges verwendet wird und dass die Daten zur zurückgelegten Fahrstrecke an die Recheneinheit 20 übertragen werden.

In wieder einem anderen Ausführungsbeispiel ist es auch denkbar, dass der Wegmesssensor 21 in Form eines Drehsensors ausgebildet ist, welcher mit einem der Räder 4 gekoppelt ist.

In wieder einem anderen Ausführungsbeispiel ist es auch denkbar, dass der Wegmesssensor 21 in Form eines Beschleunigungssensors ausgebildet ist, welcher an der Sämaschine 1 oder am Zugfahrzeug angeordnet sein kann.

Wie in Fig. 2 schematisch dargestellt, kann am Boden 16 zwischen einer Bearbeitungsfläche 22 und einem Vorgewende 23 eine Vorgewendegrenze 24 ausgebildet sein, an welcher die Vorwerkzeuge 14, 15 bzw. die Säwerkzeuge 9, 10 bei Überfahrt angehoben bzw. abgesenkt werden müssen.

Wie aus Fig. 1 weiters ersichtlich, kann vorgesehen sein, dass an der Säwerkzeughubvorrichtung 12, insbesondere am Säwerkzeughydraulikzylinder 13, eine Tiefenmesssensensorik 25 ausgebildet ist. Analog dazu kann vorgesehen sein, dass an der Vorwerkzeughubvorrichtung 17, insbesondere am Vorwerkzeughydraulikzylinder 18, eine Tiefenmesssensorik 26 ausgebildet ist. Die Tiefenmesssensoriken 25, 26 können in Form eines Wegmesssystems ausgebildet sein, mittels welchem die Ausfahrposition der Hydraulikzylinder 13, 18 bestimmt werden kann.

Wie in Fig. 1 weiters schematisch angedeutet, kann vorgesehen sein, dass an der Vorwerkzeughubvorrichtung 17 eine Entlastungsfeder 27 angeordnet ist. Die Entlastungsfeder 27 kann mit dem Vorwerkzeughydraulikzylinder 18 gekoppelt sein, oder auch an anderer Stelle an der Vorwerkzeughubvorrichtung 17 angeordnet sein. Weiters ist es auch denkbar, dass die Entlastungsfeder 27 direkt mit dem Vorwerkzeug 14, 15 gekoppelt ist.

Weiters kann vorgesehen sein, dass an der Säwerkzeughubvorrichtung 12 eine Entlastungsfeder 28 angeordnet ist. Die Entlastungsfeder 28 kann mit dem Säwerkzeughydraulikzylinder 13 gekoppelt sein, oder auch an anderer Stelle an der Säwerkzeughubvorrichtung 12 angeordnet sein. Weiters ist es auch denkbar, dass die Entlastungsfeder 28 direkt mit dem Säwerkzeug 9, 10 gekoppelt ist.

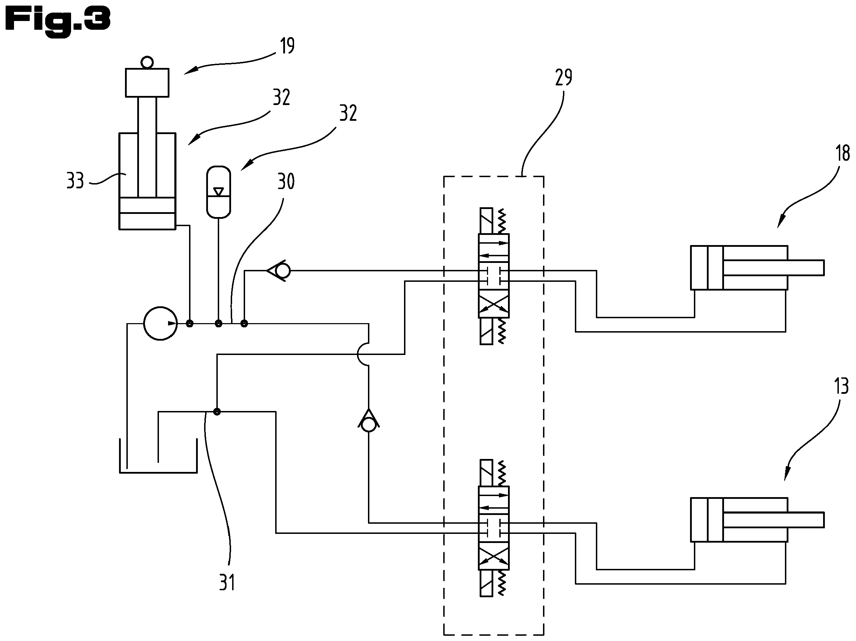

Fig. 3 zeigt ein Ausführungsbeispiel für ein stark vereinfachtes mögliches hydraulisches Schaltbild, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass ein elektrischer Hydrauliksteuerventilblock 29 ausgebildet ist, mittels welchem ein von einem Zugfahrzeug zur Verfügung stehender Hydraulikstrom einer Hydraulikflüssigkeit in den Säwerkzeughydraulikzylinder 13 bzw. in den Vorwerkzeughydraulikzylinder 18 geleitet werden kann. Der elektrische Hydrauliksteuerventilblock 29 kann zentral an der Sämaschine 1 angeordnet sein. Weiters ist es natürlich auch denkbar, dass die einzelnen Ventile für den Säwerkzeughydraulikzylinder 13 und den Vorwerkzeughydraulikzylinder 18 nicht an einem gemeinsamen Ventilblock angeordnet sind, sondern dass diese einzeln und örtlich voneinander beabstandet an der Sämaschine 1 angeordnet sind.

Weiters ist es auch denkbar, dass zusätzlich zum Säwerkzeughydraulikzylinder 13 bzw. zum Vorwerkzeughydraulikzylinder 18 weiterer parallel geschaltete Hydraulikzylinder bzw. weitere unabhängige Hydraulikzylinder für andere Werkzeuge ausgebildet sind.

Weiters kann vorgesehen sein, dass in der Hydraulik ein Druckstrang 30 bzw. ein Rücklaufstrang 31 ausgebildet sind. In einer Weiterbildung ist es denkbar, dass im Druckstrang 30 ein Hydraulikflüssigkeitszwischenspeicher 32 angeordnet ist, welcher zum Zwischenspeichern des vom Zugfahrzeug zur Verfügung stehenden hydraulischen Volumenstroms dient. Dies kann insbesondere dann notwendig sein, wenn vom Zugfahrzeug ein nur ungenügender hydraulischer Volumenstrom zur Verfügung gestellt werden kann, um die Anforderungen der Sämaschine abzudecken. Mittels des Hydraulikflüssigkeitszwischenspeichers 32 kann während einer Zeit, in welcher die Hydraulikzylinder nicht betätigt werden, Hydraulikflüssigkeit gespeichert werden und diese bei einer Betätigung der Hydraulikzylinder zur Verfügung stehen, sodass die Anhebevorgänge mit einer erhöhten Geschwindigkeit erfolgen können. Darüber hinaus können durch den Hydraulikflüssigkeitszwischenspeicher 32 Druckspitzen beim Schließen der Hydraulikventile abgefedert werden.

Wie aus Fig. 3 ersichtlich, kann vorgesehen sein, dass der Hydraulikflüssigkeitszwischenspeicher 32 in Form eines Gasdruckspeichers ausgebildet ist. In einer alternativen Ausführungsvariante oder zusätzlich kann auch vorgesehen sein, dass der Hydraulikflüssigkeitszwischenspeicher in Form eines Hydraulikzylinders 33 ausgebildet ist, welcher mit einem Anbauteil 19 gekoppelt ist, wobei das Anbauteil 19 als Rückstellmasse für den Hydraulikzylinder 33 und somit zum Speichern des hydraulischen Volumenstroms in Form von kinetischer Energie dient.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Sämaschine | 28 | Entlastungsfeder Säwerkzeughubvorrichtung |
| 2 | Hauptrahmen | 29 | elektrischer Hydrauliksteuerventilblock |
| 3 | Fahrwerk | | |
| 4 | Rad | 30 | Druckstrang |
| 5 | Deichsel | 31 | Rücklaufstrang |
| 6 | Fahrtrichtung | 32 | Hydraulikflüssigkeitszwischenspeicher |
| 7 | Vorratsbehälter | | |
| 8 | Saatgut-Dosiervorrichtung | 33 | Hydraulikzylinder |
| 9 | linkes Säwerkzeug | | |
| 10 | rechtes Säwerkzeug | | |
| 11 | Verschlauchung | | |
| 12 | Säwerkzeughubvorrichtung | | |
| 13 | Säwerkzeughydraulikzylinder | | |
| 14 | linkes Vorwerkzeug | | |
| 15 | rechtes Vorwerkzeug | | |
| 16 | Boden | | |
| 17 | Vorwerkzeughubvorrichtung | | |
| 18 | Vorwerkzeughydraulikzylinder | | |
| 19 | Anbauteil | | |
| 20 | Recheneinheit | | |
| 21 | Wegmesssensor | | |
| 22 | Bearbeitungsfläche | | |
| 23 | Vorgewende | | |
| 24 | Vorgewendegrenze | | |
| 25 | Tiefenmesssensorik Säwerkzeug | | |
| 26 | Tiefenmesssensorik Vorwerkzeug | | |
| 27 | Entlastungsfeder Vorwerkzeughubvorrichtung | | |

## Patentansprüche

1. Verfahren zum Säen mittels einer Sämaschine (1) mit einem Vorwerkzeug (14, 15) und einem Säwerkzeug (9, 10), das Verfahren umfassend die Verfahrensschritte:
- Bearbeiten eines Bodens (16) mittels dem Vorwerkzeug (14, 15);
- Einbringen von Saatgut in den Boden (16) mittels dem Säwerkzeug (9, 10);
- wenn die Sämaschine (1) eine Vorgewendegrenze (24) von einer Bearbeitungsfläche (22) in ein Vorgewende (23) überfährt, aufeinanderfolgendes Anheben des Vorwerkzeuges (14, 15) und des Säwerkzeuges (9, 10), in einer solchen Weise, dass das Vorwerkzeug (14, 15) zuerst angehoben wird und das Säwerkzeug (9, 10) nach dem Vorwerkzeug (14, 15) angehoben wird,
**dadurch gekennzeichnet, dass**
beim Überfahren der Vorgewendegrenze (24) von der Bearbeitungsfläche (22) in das Vorgewende (23) mittels einer Recheneinheit (20) ein Steuerbefehl zum Anheben des Vorwerkzeuges (14, 15) gegeben wird und dass mittels eines Wegmesssensors (21) eine zurückgelegte Wegstrecke der Sämaschine (1), seit dem Steuerbefehl zum Anheben des Vorwerkzeuges (14, 15), erfasst wird, wobei mittels der Recheneinheit (20) ein Steuerbefehl zum Anheben des Säwerkzeuges (9, 10) gegeben wird, wenn eine definierte Wegstrecke, seit dem Steuerbefehl zum Anheben des Vorwerkzeuges (14, 15), zurückgelegt wurde.

2. Verfahren nach Anspruch 1, **dadurch gekennzeichnet, dass** der Wegmesssensor (21) als Radarsensor ausgebildet ist, welcher für eine definierte Wegstrecke eine definierte Anzahl an steigenden Flanken eines Binärsignals an die Recheneinheit (20) liefert, wobei in der Recheneinheit (20) über die vorliegende Anzahl an steigenden Flanken, seit dem Steuerbefehl zum Anheben des Vorwerkzeuges (14, 15), die zurückgelegte Wegstrecke, seit dem Steuerbefehl zum Anheben des Vorwerkzeuges (14, 15), ermittelt wird.

3. Verfahren nach Anspruch 1 oder 2, **dadurch gekennzeichnet, dass** der Steuerbefehl zum Anheben des Vorwerkzeuges (14, 15) durch einen Eingabebefehl eines Maschinenbedieners in eine Bedienerschnittstelle gestartet wird.

4. Verfahren nach einem der vorhergehenden Ansprüche, **dadurch gekennzeichnet, dass** ein linkes Vorwerkzeug (14) und ein rechtes Vorwerkzeug (15), sowie ein linkes Säwerkzeug (9) und ein rechtes Säwerkzeug (10) ausgebildet sind, wobei
- ein Hubvorgang für das linke Vorwerkzeug (14) durch einen ersten Eingabebefehl gestartet wird, welcher durch einen Maschinenbediener eingegeben wird und in der Recheneinheit (20) einen Steuerbefehl zum Anheben des linken Vorwerkzeuges (14) auslöst, und wobei mittels des Wegmesssensors (21) die zurückgelegte Wegstrecke der Sämaschine (1), seit dem Steuerbefehl zum Anheben des linken Vorwerkzeuges (14), erfasst wird, wobei mittels der Recheneinheit (20) ein Steuerbefehl zum Anheben des linken Säwerkzeuges (9) gegeben wird, wenn eine definierte Wegstrecke, seit dem Steuerbefehl zum Anheben des linken Vorwerkzeuges (14), zurückgelegt wurde
und wobei
- ein Hubvorgang für das rechte Vorwerkzeug (15) durch einen zweiten Eingabebefehl gestartet wird, welcher durch einen Maschinenbediener eingegeben wird und in der Recheneinheit (20) einen Steuerbefehl zum Anheben des rechten Vorwerkzeuges (15) auslöst, und wobei mittels des Wegmesssensors (21) die zurückgelegte Wegstrecke der Sämaschine (1), seit dem Steuerbefehl zum Anheben des rechten Vorwerkzeuges (15), erfasst wird, wobei mittels der Recheneinheit (20) ein Steuerbefehl zum Anheben des rechten Säwerkzeuges (10) gegeben wird, wenn eine definierte Wegstrecke, seit dem Steuerbefehl zum Anheben des rechten Vorwerkzeuges (15), zurückgelegt wurde.

5. Verfahren nach einem der vorhergehenden Ansprüche, **dadurch gekennzeichnet, dass** bei einem Überfahren der Vorgewendegrenze (24) vom Vorgewende (23) in die Bearbeitungsfläche (22) mittels der Recheneinheit (20) ein Steuerbefehl zum Absenken des Vorwerkzeuges (14, 15) gegeben wird und dass mittels des Wegmesssensors (21) die zurückgelegte Wegstrecke der Sämaschine (1), seit dem Steuerbefehl zum Absenken des Vorwerkzeuges (14, 15), erfasst wird, wobei mittels der Recheneinheit (20) ein Steuerbefehl zum Absenken des Säwerkzeuges (9, 10) gegeben wird, wenn eine definierte Wegstrecke, seit dem Steuerbefehl zum Absenken des Vorwerkzeuges (14, 15), zurückgelegt wurde.

6. Verfahren nach Anspruch 5, **dadurch gekennzeichnet, dass** das Vorwerkzeug (14, 15) in eine vordefinierte Eintauchposition abgesenkt wird, wobei die aktuell vorliegende Eintauchposition mittels einer Tiefenmesssensorik (26) erfasst und an die Recheneinheit (20) übermittelt wird und/oder dass das Säwerkzeug (9, 10) in eine vordefinierte Eintauchtiefe abgesenkt wird, wobei die aktuell vorliegende Eintauchposition mittels einer Tiefenmesssensorik (25) erfasst und an die Recheneinheit (20) übermittelt wird.

7. Sämaschine (1) mit einem Vorwerkzeug (14, 15) und einem Säwerkzeug (9, 10), wobei das Vorwerkzeug (14, 15) zum Bearbeiten eines Bodens (16) ausgebildet ist und wobei das Säwerkzeug (9, 10) zum Einbringen von Saatgut in den Boden (16) ausgebildet ist und wobei das Vorwerkzeug (14, 15) mit einer Vorwerkzeughubvorrichtung (17) gekoppelt ist und wobei das Säwerkzeug (9, 10) mit einer Säwerkzeughubvorrichtung (12) gekoppelt ist, wobei das Vorwerkzeug (14, 15) und das Säwerkzeug (9, 10) unabhängig voneinander anhebbar sind,
**dadurch gekennzeichnet, dass**
eine Recheneinheit (20) ausgebildet ist, welche derart konfiguriert ist, dass ein Steuerbefehl zum Anheben des Vorwerkzeuges (14, 15) und ein weiterer Steuerbefehl zum Anheben des Säwerkzeuges (9, 10) gebbar ist und dass ein Wegmesssensor (21) ausgebildet ist, mittels welchem die zurückgelegte Wegstrecke der Sämaschine (1) erfassbar ist, wobei der Wegmesssensor (21) mit der Recheneinheit (20) gekoppelt ist, wobei die Recheneinheit (20) zum Ausführen der Steuerbefehle des Verfahrens nach einem der Ansprüche 1 bis 6 ausgebildet ist.

8. Sämaschine (1) nach Anspruch 7, **dadurch gekennzeichnet, dass** ein elektrischer Hydrauliksteuerventilblock (29) ausgebildet ist, welcher mit einem Vorwerkzeughydraulikzylinder (18) der Vorwerkzeughubvorrichtung (17) und mit einem Säwerkzeughydraulikzylinder (13) der Säwerkzeughubvorrichtung (12) gekoppelt ist, wobei mittels des elektrischen Hydrauliksteuerventilblockes (29) selektiv ein Hydraulikflüssigkeitsstrom in den Vorwerkzeughydraulikzylinder (18) und/oder in den Säwerkzeughydraulikzylinder (13) leitbar ist.

9. Sämaschine (1) nach Anspruch 7 oder 8, **dadurch gekennzeichnet, dass** die Vorwerkzeughubvorrichtung (17) mit einer Tiefenmesssensorik (26) gekoppelt ist, mittels welcher eine Anhebeposition der Vorwerkzeughubvorrichtung (17) erfassbar ist und/oder dass die Säwerkzeughubvorrichtung (12) mit einer Tiefenmesssensorik (25) gekoppelt ist, mittels welcher eine Anhebeposition der Säwerkzeughubvorrichtung (12) erfassbar ist.

10. Sämaschine (1) nach Anspruch 9, **dadurch gekennzeichnet, dass** die Tiefenmesssensorik (26) der Vorwerkzeughubvorrichtung (17) in Form eines Wegmesssensors ausgebildet ist, welcher mit dem Vorwerkzeughydraulikzylinder (18) gekoppelt ist und/oder dass die Tiefenmesssensorik (25) der Säwerkzeughubvorrichtung (12) in Form eines Wegmesssensors ausgebildet ist, welcher mit dem Säwerkzeughydraulikzylinder (13) gekoppelt ist.

11. Sämaschine (1) nach einem der Ansprüche 8 bis 10, **dadurch gekennzeichnet, dass** der elektrische Hydrauliksteuerventilblock (29) mit einem Hydraulikflüssigkeitszwischenspeicher (32) gekoppelt ist.

12. Sämaschine (1) nach Anspruch 11, **dadurch gekennzeichnet, dass** der Hydraulikflüssigkeitszwischenspeicher (32) einen Hydraulikzylinder (33) umfasst, welcher mit einem Anbauteil (19) der Sämaschine (1), insbesondere mit einem Vorratsbehälter (7) der Sämaschine (1) gekoppelt ist, wobei die Gewichtskraft des Anbauteiles (19) zum Bereitstellen des Hydraulikdruckes im Hydraulikzylinder (33) dient.

13. Sämaschine (1) nach einem der Ansprüche 7 bis 12, **dadurch gekennzeichnet, dass** die Vorwerkzeughubvorrichtung (17) mit einer Entlastungsfeder (27) gekoppelt ist
und/oder
dass die Säwerkzeughubvorrichtung (12) mit einer Entlastungsfeder (28) gekoppelt ist.

14. Sämaschine (1) nach Anspruch 13, **dadurch gekennzeichnet, dass** die Entlastungsfeder (27) der Vorwerkzeughubvorrichtung (17) derart dimensioniert und angeordnet ist, dass das Vorwerkzeug (14) bei einem drucklosen Vorwerkzeughydraulikzylinder (18) in einer Gleichgewichtsposition zwischen einer vollständig angehobenen Position und einer vollständig abgesenkten Position verweilt, wobei der Vorwerkzeughydraulikzylinder (18) ein doppeltwirkender Hydraulikzylinder ist
und/oder
dass die Entlastungsfeder (28) der Säwerkzeughubvorrichtung (12) derart dimensioniert und angeordnet ist, dass das Säwerkzeug (9, 10) bei einem drucklosen Säwerkzeughydraulikzylinder (13) in einer Gleichgewichtsposition zwischen einer vollständig angehobenen Position und einer vollständig abgesenkten Position verweilt, wobei der Säwerkzeughydraulikzylinder (13) ein doppeltwirkender Hydraulikzylinder ist.

## Claims

1. A method for sowing by means of a seed drill (1) with a pre-tool (14, 15) and a sowing tool (9, 10), the method comprising the method steps of:
- working a soil (16) by means of the pre-tool (14, 15);
- introducing seeds into the soil (16) by means of the sowing tool (9, 10);
- when the seed drill (1) passes over a headland boundary (24) from a working surface (22) into a headland (23), successively raising the pre-tool (14, 15) and the sowing tool (9, 10) in such a way that the pre-tool (14, 15) is raised first and the sowing tool (9, 10) is raised after the pre-tool (14, 15),
**characterized in that**
when the headland boundary (24) of the working surface (22) is passed into the headland (23), a control command for raising the pre-tool (14, 15) is given by means of a computing unit (20) and that by means of a distance measuring sensor (21), a distance traveled by the seed drill (1) since the control command for raising the pre-tool (14, 15), is recorded, wherein a control command for raising the sowing tool (9, 10) is given by means of the computing unit (20) when a defined distance has been covered since the control command for raising the pre-tool (14, 15).

2. The method according to claim 1, **characterized in that** the distance measuring sensor (21) is configured as a radar sensor which supplies a defined number of rising edges of a binary signal to the computing unit (20) for a defined distance, wherein the distance travelled since the control command to raise the pre-tool (14, 15) is determined in the computing unit (20) via the present number of rising edges since the control command to raise the pre-tool (14, 15).

3. The method according to claim 1 or 2, **characterized in that** the control command for raising the pre-tool (14, 15) is started by an input command of a machine operator into a user interface.

4. The method according to one of the preceding claims, **characterized in that** a left pre-tool (14) and a right pre-tool (15), as well as a left sowing tool (9) and a right sowing tool (10) are formed, wherein
- a raising operation for the left pre-tool (14) is started by a first input command, which is input by a machine operator and triggers a control command for raising the left pre-tool (14) in the computing unit (20), and wherein by means of the distance measuring sensor (21), the distance traveled by the seed drill (1) since the control command for raising the left pre-tool (14), is recorded, wherein a control command for raising the left sowing tool (9) is given by means of the computing unit (20) when a defined distance has been covered since the control command for raising the left pre-tool (14)
and wherein
- a raising operation for the right pre-tool (15) is started by a second input command, which is entered by a machine operator and triggers a control command for raising the right pre-tool (15) in the computing unit (20), and wherein by means of the distance measuring sensor (21), the distance traveled by the seed drill (1) since the control command for raising the right pre-tool (15), is recorded, wherein a control command for raising the right sowing tool (10) is given by means of the computing unit (20) when a defined distance has been covered since the control command for raising the right pre-tool (15).

5. The method according to one of the preceding claims, **characterized in that** when the headland boundary (24) is crossed from the headland (23) into the working area (22), a control command for lowering the pre-tool (14, 15) is given by means of the computing unit (20) and that the distance travelled by the seed drill (1) since the control command for lowering the pre-tool (14, 15) is recorded by means of the distance measuring sensor (21), wherein a control command for lowering the sowing tool (9, 10) is given by means of the computing unit (20) when a defined distance has been covered since the control command for lowering the pre-tool (14, 15).

6. The method according to claim 5, **characterized in that** the pre-tool (14, 15) is lowered into a predefined immersion position, wherein the currently present immersion position is detected by means of a depth measurement sensor system (26) and transmitted to the computing unit (20) and/or that the sowing tool (9, 10) is lowered into a predefined immersion depth, wherein the currently present immersion position is detected by means of a depth measurement sensor system (25) and transmitted to the computing unit (20).

7. A seed drill (1) with a pre-tool (14, 15) and a sowing tool (9, 10), wherein the pre-tool (14, 15) is configured for working a soil (16) and wherein the sowing tool (9, 10) is configured for introducing seeds into the soil (16) and wherein the pre-tool (14, 15) is coupled to a pre-tool raising device (17) and wherein the sowing tool (9, 10) is coupled to a sowing tool raising device (12), wherein the pre-tool (14, 15) and the sowing tool (9, 10) can be raised independently of one another,
**characterized in that**
a computing unit (20) is formed, which is configured such that a control command for raising the pre-tool (14, 15) and a further control command for raising the sowing tool (9, 10) can be given, and that a distance measuring sensor (21) is formed, by means of which the distance travelled by the seed drill (1) can be detected, wherein the distance measuring sensor (21) is coupled to the computing unit (20), wherein the computing unit (20) is configured to execute the control commands of the method according to one of claims 1 to 6.

8. The seed drill (1) according to claim 7, **characterized in that** an electric hydraulic control valve block (29) is formed, which is coupled to a pre-tool hydraulic cylinder (18) of the pre-tool raising device (17) and to a sowing tool hydraulic cylinder (13) of the sowing tool raising device (12), wherein by means of the electric hydraulic control valve block (29) a hydraulic fluid flow can be selectively directed into the pre-tool hydraulic cylinder (18) and/or into the sowing tool hydraulic cylinder (13).

9. The seed drill (1) according to claim 7 or 8, **characterized in that** the pre-tool raising device (17) is coupled to a depth measuring sensor system (26), by means of which a raising position of the pre-tool raising device (17) can be detected and/or that the sowing tool raising device (12) is coupled to a depth measuring sensor system (25), by means of which a raising position of the sowing tool raising device (12) can be detected.

10. The seed drill (1) according to claim 9, **characterized in that** the depth measuring sensor system (26) of the pre-tool raising device (17) is configured in the form of a distance measuring sensor which is coupled to the pre-tool hydraulic cylinder (18) and/or that the depth measuring sensor system (25) of the sowing tool raising device (12) is configured in the form of a distance measuring sensor which is coupled to the sowing tool hydraulic cylinder (13).

11. The seed drill (1) according to one of claims 8 to 10, **characterized in that** the electric hydraulic control valve block (29) is coupled to a hydraulic fluid accumulator (32).

12. The seed drill (1) according to claim 11, **characterized in that** the hydraulic fluid accumulator (32) comprises a hydraulic cylinder (33) which is coupled to an attachment part (19) of the seed drill (1), in particular to a reservoir (7) of the seed drill (1), wherein the weight force of the attachment part (19) serves to provide the hydraulic pressure in the hydraulic cylinder (33).

13. The seed drill (1) according to one of claims 7 to 12, **characterized in that** the pre-tool raising device (17) is coupled to a relief spring (27)
and/or that the sowing tool raising device (12) is coupled to a relief spring (28).

14. The seed drill (1) according to claim 13, **characterized in that** the relief spring (27) of the pre-tool raising device (17) is dimensioned and arranged such that the pre-tool (14) remains in an equilibrium position between a fully raised position and a fully lowered position with a pressureless pre-tool hydraulic cylinder (18), wherein the pre-tool hydraulic cylinder (18) is a double-acting hydraulic cylinder
and/or
that the relief spring (28) of the sowing tool raising device (12) is dimensioned and arranged such that the sowing tool (9, 10) remains in an equilibrium position between a fully raised position and a fully lowered position when the sowing tool hydraulic cylinder (13) is depressurized, wherein the sowing tool hydraulic cylinder (13) is a double-acting hydraulic cylinder.

## Revendications

1. Procédé de semis à l'aide d'un semoir (1) équipé d'un outil avant (14, 15) et d'un outil de semis (9, 10), le procédé comprenant les étapes suivantes :
- travail du sol (16) à l'aide de l'outil avant (14, 15) ;
- introduction de semences dans le sol (16) à l'aide de l'outil de semis (9, 10) ;
- lorsque le semoir (1) franchit une limite de tournière (24) d'une surface de travail (22) vers une tournière (23), levage successif de l'outil avant (14, 15) et de l'outil de semis (9, 10) de telle manière que l'outil avant (14, 15) soit relevé en premier et que l'outil de semis (9, 10) soit relevé après l'outil avant (14, 15),
**caractérisé en ce que**
lors du franchissement de la limite de tournière (24) de la surface de travail (22) vers la tournière (23), un ordre de commande de levage de l'outil avant (14, 15) est donné au moyen d'une unité de calcul (20) et qu'un capteur de mesure de distance (21) enregistre la distance parcourue par le semoir (1) depuis la commande de levage de l'outil avant (14, 15), un ordre de commande étant donné au moyen de l'unité de calcul (20) pour relever l'outil de semis (9, 10) lorsqu'une distance définie a été parcourue depuis l'ordre de commande de levage de l'outil avant (14, 15).

2. Procédé selon la revendication 1, **caractérisé en ce que** le capteur de mesure de distance (21) est conçu comme un capteur radar qui fournit à l'unité de calcul (20) un nombre défini de flancs montants d'un signal binaire pour une distance définie, la distance parcourue depuis l'ordre de commande de levage de l'outil avant (14, 15) étant calculée dans l'unité de calcul (20) à partir du nombre de flancs ascendants présents depuis l'ordre de commande de levage de l'outil avant (14, 15).

3. Procédé selon la revendication 1 ou 2, **caractérisé en ce que** l'ordre de commande de levage de l'outil avant (14, 15) est lancé par une commande de saisie d'un opérateur de machine dans une interface utilisateur.

4. Procédé selon l'une des revendications précédentes, **caractérisé en ce qu'**un outil avant gauche (14) et un outil avant droit (15) ainsi qu'un outil de semis gauche (9) et un outil de semis droit (10) sont formés,
- un processus de levage pour l'outil avant gauche (14) étant lancé par une première commande d'entrée, qui est saisie par un opérateur de machine et déclenche dans l'unité de calcul (20) un ordre de commande de levage de l'outil avant gauche (14), et la distance parcourue par le semoir (1) depuis l'ordre de commande de levage de l'outil avant gauche (14) étant enregistrée au moyen du capteur de mesure de distance (21), un ordre de commande de levage de l'outil de semis gauche (9) étant donné au moyen de l'unité de calcul (20) lorsqu'une distance définie a été parcourue depuis l'ordre de commande de levage de l'outil avant gauche (14), et
- un processus de levage pour l'outil avant droit (15) étant lancé par une deuxième commande d'entrée, qui est saisie par un opérateur de machine et déclenche dans l'unité de calcul (20) un ordre de commande de levage de l'outil avant droit (15), et la distance parcourue par le semoir (1) depuis l'ordre de commande de levage de l'outil avant droit (15) étant enregistrée au moyen du capteur de mesure de distance (21), un ordre de commande de levage de l'outil de semis droit (10) étant donné au moyen de l'unité de calcul (20) lorsqu'une distance définie a été parcourue depuis l'ordre de commande de levage de l'outil avant droit (15).

5. Procédé selon l'une des revendications précédentes, **caractérisé en ce que**, lors du franchissement de la limite de tournière (24) de la tournière (23) vers la surface de travail (22), un ordre de commande d'abaissement de l'outil avant (14, 15) est donné par l'unité de calcul (20) et **en ce que** le capteur de mesure de distance (21) enregistre la distance parcourue par le semoir (1) depuis l'ordre de commande d'abaissement de l'outil avant (14, 15), un ordre de commande d'abaissement de l'outil de semis (9, 10) étant donné au moyen de l'unité de calcul (20) lorsqu'une distance définie a été parcourue depuis l'ordre de commande d'abaissement de l'outil avant (14, 15).

6. Procédé selon la revendication 5, **caractérisé en ce que** l'outil avant (14, 15) est abaissé dans une position d'immersion prédéfinie, la position d'immersion actuelle étant enregistrée à l'aide d'un capteur de mesure de profondeur (26) et transmise à l'unité de calcul (20) et/ou **en ce que** l'outil de semis (9, 10) est abaissé à une profondeur d'immersion prédéfinie, la position d'immersion actuelle étant enregistrée au moyen d'un capteur de mesure de profondeur (25) et transmise à l'unité de calcul (20).

7. Semoir (1) comprenant un outil avant (14, 15) et un outil de semis (9, 10), l'outil avant (14, 15) étant conçu pour travailler un sol (16) et l'outil de semis (9, 10) étant conçu pour introduire des semences dans le sol (16) et l'outil avant (14, 15) étant couplé à un dispositif de levage d'outil avant (17) et l'outil de semis (9, 10) étant couplé à un dispositif de levage d'outil de semis (12), l'outil avant (14, 15) et l'outil de semis (9, 10) pouvant être levés indépendamment l'un de l'autre,
**caractérisé en ce qu'**une unité de calcul (20) est conçue de telle sorte qu'un ordre de commande de levage de l'outil avant (14, 15) et un autre ordre de commande de levage de l'outil de semis (9, 10) peuvent être donnés, et qu'un capteur de mesure de distance (21) est conçu pour permettre l'enregistrement de la distance parcourue par le semoir (1), le capteur de mesure de distance (21) étant couplé à l'unité de calcul (20), l'unité de calcul (20) étant conçue pour exécuter les ordres de commande du procédé selon l'une des revendications 1 à 6.

8. Semoir (1) selon la revendication 7, **caractérisé en ce qu'**un bloc de soupapes de commande hydraulique électrique (29) est conçu, lequel est couplé à un vérin hydraulique d'outil avant (18) du dispositif de levage d'outil avant (17) et à un vérin hydraulique d'outil de semis (13) du dispositif de levage d'outil de semis (12), le bloc de soupapes de commande hydraulique électrique (29) permettant de diriger de manière sélective un flux de fluide hydraulique dans le vérin hydraulique d'outil avant (18) et/ou dans le vérin hydraulique d'outil de semis (13).

9. Semoir (1) selon la revendication 7 ou 8, **caractérisé en ce que** le dispositif de levage d'outil avant (17) est couplé à un capteur de mesure de profondeur (26) qui permet d'enregistrer une position de levage du dispositif de levage d'outil avant (17) et/ou **en ce que** le dispositif de levage d'outil de semis (12) est couplé à un capteur de mesure de profondeur (25) qui permet d'enregistrer une position de levage du dispositif de levage d'outil de semis (12).

10. Semoir (1) selon la revendication 9, **caractérisé en ce que** le capteur de mesure de profondeur (26) du dispositif de levage d'outil avant (17) est conçu sous la forme d'un capteur de mesure de distance qui est couplé au vérin hydraulique d'outil avant (18) et/ou **en ce que** le capteur de mesure de profondeur (25) du dispositif de levage d'outil de semis (12) est conçu sous la forme d'un capteur de mesure de distance qui est couplé au vérin hydraulique d'outil de semis (13).

11. Semoir (1) selon l'une des revendications 8 à 10, **caractérisé en ce que** le bloc de soupapes de commande hydraulique électrique (29) est couplé à un réservoir intermédiaire de fluide hydraulique (32).

12. Semoir (1) selon la revendication 11, **caractérisé en ce que** le réservoir intermédiaire de fluide hydraulique (32) comprend un vérin hydraulique (33) qui est couplé à une pièce de montage (19) du semoir (1), en particulier à un réservoir (7) du semoir (1), le poids de la pièce de montage (19) servant à fournir la pression hydraulique dans le vérin hydraulique (33).

13. Semoir (1) selon l'une des revendications 7 à 12, **caractérisé en ce que** le dispositif de levage d'outil avant (17) est couplé à un ressort à décharge (27) et/ou **en ce que** le dispositif de levage d'outil de semis (12) est couplé à un ressort à décharge (28).

14. Semoir (1) selon la revendication 13, **caractérisé en ce que** le ressort à décharge (27) du dispositif de levage d'outil avant (17) est dimensionné et agencé de telle sorte que l'outil avant (14), lorsque le vérin hydraulique d'outil avant (18) est sans pression, se maintienne dans une position d'équilibre entre une position complètement relevée et une position complètement abaissée, le vérin hydraulique d'outil avant (18) étant un vérin hydraulique à double effet et/ou
**en ce que** le ressort à décharge (28) du dispositif de levage d'outil de semis (12) est dimensionné et agencé de telle sorte que l'outil de semis (9, 10) reste dans une position d'équilibre entre une position complètement relevée et une position complètement abaissée lorsque le vérin hydraulique d'outil de semis (13) est sans pression, le vérin hydraulique d'outil de semis (13) étant un vérin hydraulique à double effet.
